# EUROPEAN PATENT SPECIFICATION

(11) **EP 3 081 800 B1**
(45) Date of publication and mention of the grant of the patent: **05.06.2019**
(21) Application number: 16165006.4
(22) Date of filing: 13.04.2016
(51) Int. Cl.: F02M 21/02, F02M 21/06, F02M 31/18, F02D 19/02, F02D 41/00

(54) **FUEL WITHDRAWING SYSTEM FROM A RESERVOIR OF COMPRESSED NATURAL GAS TO SUPPLY AN INTERNAL COMBUSTION ENGINE**
SYSTEM ZUM ABZIEHEN VON KRAFTSTOFF AUS EINEM VORRATSBEHÄLTER VON KOMPRIMIERTEN ERDGAS ZUR VERSORGUNG EINES VERBRENNUNGSMOTORS
SYSTÈME DE RETRAIT DE CARBURANT DEPUIS UN RÉSERVOIR DE GAZ NATUREL COMPRIMÉ POUR ALIMENTER UN MOTEUR À COMBUSTION INTERNE

(30) Priority: 13.04.2015 IT TO20150213
(43) Date of publication of application: 19.10.2016
(73) Proprietor: IVECO S.p.A., 10156 Torino (IT)
(72) Inventor: BASILE, Salvatore, 10040 LEINI' (IT); D'EPIRO, Clino, 10091 ALPIGNANO (IT)
(74) Representative: Franzolin, Luigi

(56) References cited:
- WO-A1-2013/181753
- US-A- 5 697 346
- US-A1- 2001 003 977
- US-A1- 2009 088 983
- US-A1- 2011 226 362
- US-A1- 2015 053 180

## Description

### Technical field of the invention

The invention relates to the field of engine-driven vehicles provided with internal combustion engines supplied by a compressed gaseous fuel.

### State of the art

Methane is one of the most ecological fuels used to supply internal combustion engines with a controlled ignition, namely those provided with a spark plug for the fuel mixture. Methane is usually stored in suitable reservoirs in a compressed gaseous phase, with pressures close to 220 bar.

Actually, the so-called "methane" is not pure methane, but it also contains propane and ethane (or ethylene) in a minimum fraction amounting to 13% by volume.

At the pressures used to distribute and store the so-called methane for methane-powered vehicles, the fractions of propane and ethane tend to condense in the vehicle reservoir in order to then tend to re-gasify, when below a predefined threshold, the inner pressure of the reservoir reduces due to the withdrawing of the methane itself.

It is evident that, when the reservoir is full, the percentage of withdrawn pure methane is much greater compared to when the reservoir is almost empty.

This causes different problems. As a matter of fact, pure methane has an octane number that is very different, approximately 130, from a mixture in which propane and ethane make up significant fractions. Indeed, a mixture of propane and ethane has an octane number of approximately 105.

For this reason, manufacturers of "methane" powering systems are forced to use settings of the supply parameters that are very restrictive and strongly limit the performances of the internal combustion engine due to high variability of the octane number of the methane-based mixture injected into the internal combustion engine.

For the purposes of this invention, the terms "methane" or "natural gas" indicate a methane-based mixture also containing propane and ethane. If, on the other hand, the term "pure methane" is used, reference is made to methane CH4.

The terms "ethylene" and "ethane" are synonyms.

US5697346 proposes to determine by determine the combustion properties of natural gas through the velocity of sound in the gaseous fuel. This sound velocity measurement is utilized to control and adjust engine performance factors such as ignition timing, fuel flow rate, air/fuel ratio, fuel injection timing, and pilot fuel oil quantity and timing in dual fuel systems.

Document US 2015/0053180 discloses a fuel system for injecting liquid and gaseous fuel simultaneously into an engine, where both liquid and gaseous phases are taken from one tank.

### Summary οf_the invention

Therefore, the object of the invention is to overcome the limits of the prior art by providing a fuel withdrawing system, from a relative reservoir of compressed natural gas, to supply an internal combustion engine

The idea on which the invention is based is that of separately withdrawing a gaseous phase and a liquid phase, also called condensed fraction, from a methane reservoir, so as to supply a relative internal combustion engine.

As the liquid phase gathers in a low part of the reservoir, it is possible to provide a first opening, also called high opening, to withdraw the gaseous phase, namely substantially pure methane, and a second opening, also called low opening, to withdraw the liquid phase stored in the reservoir and substantially consisting of a mixture of propane and ethane.

As traditional reservoirs substantially have a cylindrical shape with the symmetry axis usually arranged horizontally, the same opening, usually a central opening, can be used to introduce two tubes, one having the relative opening arranged in a high part of the cylinder and the other one having a relative opening arranged in a low part of the cylinder.

The subject-matter of this invention is a fuel withdrawing system from a reservoir of compressed natural gas to supply an internal combustion engine according to claim 1.

According to the invention, the liquid phase and the gaseous phase are withdrawn simultaneously, at least immediately after a refuelling, and in a predefined mass or volume ratio relative to one another, so as to be supplied together to the internal combustion engine. In this way, the system can supply a desired mixture in terms of anti-knocking properties and octane number, at least until the aforesaid pressure threshold is reached, below which the liquid phase starts gasifying in the reservoir. Therefore, the performances of the internal combustion engines are not jeopardized as described above.

According to another preferred embodiment of the invention, the mixing ratio between the liquid phase and the gaseous phase is varied according to the engine point. Indeed, when the internal combustion engines operates in conditions in which a lower octane number is tolerable, the fuel supplied to the internal combustion engine comprises a more significant or total percentage of liquid phase, whereas, when the internal combustion engine operates in conditions in which a higher octane number is necessary, the percentage of liquid phase is drastically reduced or eliminated.

According to a further preferred embodiment of the invention, which can be combined with the previous ones, the operating parameters of the internal combustion engine are varied according to the methane-propane/ethane ratio supplied to the internal combustion engine.

These operating parameters, by mere way of example, can be the injection times, the mixture ignition times, the opening and closing angles of the valves, if they are adjustable, and the intervention of a wastegate valve, in case of a supercharged internal combustion engine.

It is evident that an optimal control of the percentage of liquid phase and gaseous phase supplied to the internal combustion engine can be obtained only when the reservoir is full, namely immediately after a refuelling, and until a predefined pressure threshold is reached, below which the condensed phase contained in the reservoir tends to gasify and, consequently, one can, at the most, estimate the relative percentages to control the operating parameters of the internal combustion engine. This can happen when, although preferring the withdrawing of the liquid phase, the operating conditions of the internal combustion engine do not allow a quick consumption of propane/ethane.

According to a further preferred embodiment of the invention, a second reservoir is associated with said low opening of the first reservoir and is intermediate between said first reservoir and the fuel injection system of the internal combustion engine. Automatic transfer means are adapted to transfer the sole liquid phase (or condensed fraction) from the first reservoir to the second reservoir, so that it can freely gasify as the first reservoir empties. In this way, one can properly control the fuel mixture supplied to the internal combustion engine, without having to implement complicated algorithms for the estimation thereof.

Operatively, the supply system of the internal combustion engine simultaneously comprises a pressure reduction device for the gaseous phase and a vaporisation device for the liquid fraction. Preferably, the output pressure is the same for the reduction device and the vaporisation device, so as allow the fractions to be more easily mixed during the injection into the engine cylinders.

Another subject-matter of the invention is a terrestrial vehicle provided with an internal combustion engine with a controlled ignition, with at least one first reservoir intended to be filled with a methane-based mixture, and with a reservoir withdrawing system described above.

The claims describe preferred embodiments of the invention, thus forming an integral part of the description.

### Brief description of the figures

Further objects and advantages of the invention will be best understood upon perusal of the following detailed description of an embodiment thereof (and of relative variants) with reference to the accompanying drawings merely showing non-limiting examples, wherein:
figure 1 shows a diagram of an embodiment of the system according to the invention;
figure 2 shows another preferred variant of the invention.

In the figures, the same numbers and the same reference letters indicate the same elements or components.

For the purposes of the invention, the term "second" component does not imply the presence of a "first" component. As a matter of fact, these terms are only used for greater clarity and should not be interpreted in a limiting manner.

### Detailed description of embodiments

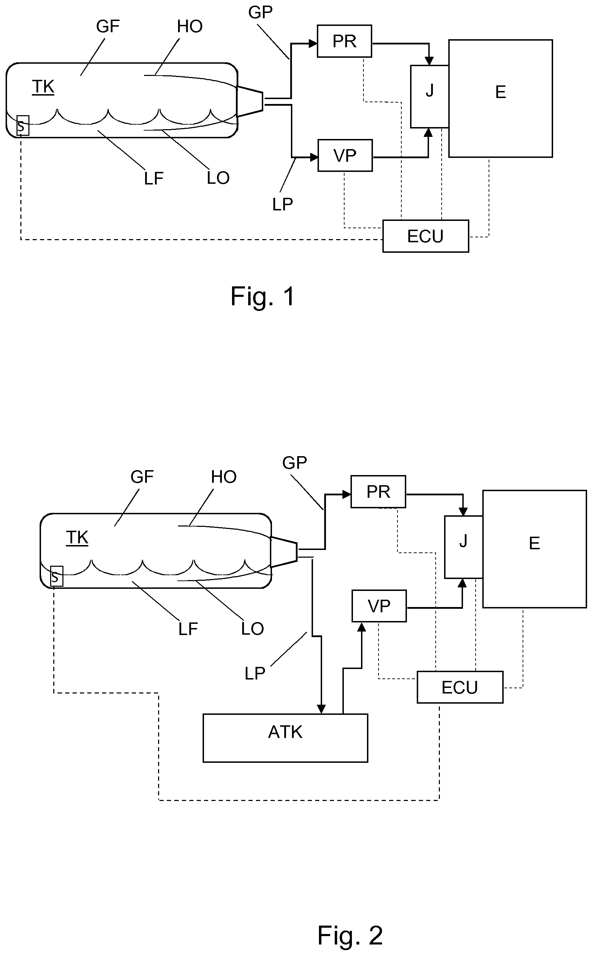

With reference to figure 1, a reservoir TK for compressed natural gas comprises a high opening HO and a low opening LO, so as to allow the gaseous phase GF and the liquid or condensed phase LF to be withdrawn from the reservoir TK separately and independently.

A first duct GP establishes a communication between said high opening HO and injection means J cooperating with an internal combustion engine E.

A second duct LP establishes a communication between said low opening LO and said injection means J cooperating with an internal combustion engine E.

On the first duct GP there is arranged a pressure reduction device PR, which is adapted to adapt the pressure of the gaseous phase to a predefined injection pressure. Similarly, on the second duct LP there is arranged a vaporisation device VP, which is adapted to gasify the withdrawn condensed phase LP, so as to obtain a predefined output pressure, which is adequate for the injection into the cylinders of the internal combustion engine.

It should be pointed out that, in case of use of methane, the gaseous phase has a completely different nature compared to the liquid phase, since, whereas the gaseous phase relates to a non-condensable chemical composition, the liquid phase relates to a condensable mixture of compositions, which is completely different from the first one.

A processing unit, for example the engine control unit ECU, controls the withdrawing of the liquid and gaseous phases and the injection means J.

All methane-powered systems usually comprise a pressure sensor, which can be used to estimate the level of filling of the methane reservoir TK.

According to a first preferred embodiment of the invention, the processing unit ECU is adapted to store the measured pressure levels and to acknowledge the refuelling event based on the measurement of the pressure measured in the reservoir TK.

Starting from that moment, for a predefined consumption of fuel, the processing unit prefers the consumption of the liquid phase, withdrawing it separately from the gaseous phase. "Preferring" means that it is used in a privileged manner, according to the operating conditions of the engine, or that it is used changing the settings of the internal combustion engines, or both.

Hence, this liquid phase can be injected into the cylinders in the liquid phase or it can be gasified, together with the substantially pure methane withdrawn from the high opening HO of the reservoir TK.

When the processing unit ECU estimates that the liquid phase has ended, then the process goes on with the withdrawing of fuel from the sole high opening HO. According to a preferred embodiment, which can be combined with the previous one, the mixing of the methane and propane/ethane portions is a function of the operating point of the engine, so as not to jeopardize the performances thereof.

In other words, the two phases are withdrawn selectively and they are injected simultaneously into the engine, so as to obtain a desired octane number, which can be fixed or can be a function of the operating point of the internal combustion engine.

The two selectively withdrawn phases can be injected into the engine both through different injectors and through the same injectors. In the first case, the mixing takes place in the cylinders, for example to obtain a stratified injection, whereas, in the second case, the mixing of the two phases takes place before the subsequent injection into the cylinders.

According to another preferred embodiment of the invention, which can be combined with the previous ones, the operating parameters of the internal combustion engine are a function of the mixing of the methane and propane/ethane portions. Furthermore, both the fuel mixture and the operating parameters of the engine can be properly controlled. According to a preferred embodiment, which can be combined with the previous ones, a sensor S is arranged inside the reservoir TK to constantly measure the volume of the condensed fraction.

Thanks to this solution, one can avoid estimating the consumption of the liquid phase through the injection means, thus obtaining a direct measurement of the propane/ethane fraction stored in the reservoir TK.

It should be pointed out that figure 1 does not show valves and it looks like the control of the withdrawing is directly operated upon the pressure reduction device PR or upon the vaporisation device VP, but this is only a representation simplification. Therefore, further control valves, non-return valves and safety valves can be provided.

Figure 2 describes a further variant of the invention, in which a second reservoir ATK is connected to the second duct LP between the low opening LO and the vaporisation device VP.

Thanks to this second reservoir, which can be defined as an auxiliary reservoir, the liquid phase can be transferred from the methane reservoir TK immediately after the refuelling.

Therefore, it can be used even when the pressure inside the methane reservoir TK has drastically decreased, without risking the gasification of the propane and butane fractions in the methane reservoir TK.

The liquid phase sensor S, arranged in the methane reservoir TK, is, as already mentioned above, optional. When it is not present, 1 - 2% by volume of the methane reservoir TK can be transferred into the auxiliary reservoir ATK, withdrawing from the low part LO thereof, immediately after a refuelling.

Said sensor S can be, for example, a float.

When, on the other hand, there is a sensor S adapted to measure a liquid phase volume contained in the methane reservoir TK, the transferring operation can be controlled based on the measurement of said sensor S.

The presence of the second reservoir, intended to substantially store propane and ethane, turns out to be very advantageous, since it can be filled independently of the methane reservoir, when there is no methane filling station available, but you can only find a LPG filling station.

According to a further preferred embodiment of the invention, which can be combined with the previous ones, the engine processing unit, besides controlling the mixing of methane, propane and butane, can also adapt operating parameters of the internal combustion engine, so as to better adjust its behaviour to the injected mixture.

The operating parameters of the engine can be, by mere way of example, the injection times, the mixture ignition times, the opening and closing angles of the valves, if they are adjustable, and the intervention of a wastegate valve, in case of a supercharged internal combustion engine.

When adapting said operating parameters of the engine, the ECU can take into account, besides the load of the engine, i.e. the operating point of the engine, the temperature of the air taken in and the temperature of the cooling water, so as to control the percentages of the two species, namely methane and propane/ethane.

It should be pointed out that models are known, which describe the inclination to knocking of the fuel based on the operating parameters and on the features of the engine, and, therefore, that knocking indexes of the internal combustion are known, which can be calculated by the ECU and take into account the aforesaid operating parameters and the features of the internal combustion engine. Therefore, the fuel mixture can be adapted in real time to the operating parameters of the engine, so as to avoid the self-knocking of the fuel.

Alternatively, a knock sensor can be implemented and used to control the methane and propane/ethane mixture injected. Among the possible mixing ratios, it is also possible to inject substantially pure methane or LPG, which means propane/ethane with a very small percentage of methane.

The octane number of the two fractions is different when there is a completely different chemical composition of the two fractions and this fact is different compared to trying to influence the octane request of the engine exploiting the latent evaporation heat of the liquid phase. This scenario is completely different from the one described, for example, in US2015053180 or US2001003977, where the only fuel in the two phases, i.e. the liquid phase and the gaseous phase, is propane or butane (LPG). As a matter of fact, this fuel, despite being a mixture of two different components, does not substantially differ, in its composition, in the liquid phase and in the gaseous phase. Therefore, the gaseous phase and the liquid phase substantially have the same octane number, but the injection of the liquid phase, as it leads to an evaporation in the supply air, can reduce the temperature of the charge, thus reducing the octane request of the engine. It basically is an attempt to influence the octane request of the engine so that it can work well in different circumstances with a fuel with an octane number that is fixed and known in advance.

On the contrary, the object of the invention is to separate two fractions, clearly different from one another both from the point of view of the physical state (liquid/gaseous) and from the point of view of the octane number, and to adapt the octane quality of the fuel mixture to the request of the engine.

Typical conditions that allow the engine to operate with a fuel having a reduced octane number are:
1) Idle
2) Driving conditions with a load below a predetermined percentage (i.e. 35%)
3) Conditions of very cold air taken in and/or engine water still cold
4) Conditions of dragged engine, wherein the injection of fuel is necessary so as not to cool the ATS (After Treatment System).

The ATS generally comprises at least one three-way catalytic converter.

The ECU can be properly programmed to selectively withdraw the two fractions and mix them when they are both available and/or to prefer the liquid fraction in the aforesaid four operating conditions. However, in case the methane reservoir TK is empty and, on the other hand, the second reservoir is full, possibly because of the sole presence of LPG filling stations, the ECU can also be programmed to change the operating parameters of the engine mentioned above, so as to adapt to this type of fuel.

The engine ECU, in this conditions, carries out an adjustment (limitation) of the performances for the operation with this fuel with a reduced octane number. According to a preferred embodiment of the invention, the internal combustion engine E can be provided with one single injection system E for the gas alternatively supplied by the methane pressure reduction device PR or by the condensed fraction vaporisation device VP or by both. Therefore, both the pressure reduction device and the vaporisation device preferably have the same output pressure, preferably 4 bar.

Alternatively, an injection system can be provided, which is separate fro the condensed fraction and the methane.

It should be pointed out that, in the figures, the cylinder TK is shown with its development axis arranged in a horizontal position, as this is how cylinders are normally arranged on board vehicles, but this does not exclude the fact that it can be oriented in any other way; what matters is that there are a high opening for withdrawing a gaseous fraction and a low opening for withdrawing a liquid fraction.

According to this embodiment, the condensed fraction can be injected in a liquid phase, i.e. without the use of a vaporisation device VP, into the intake manifolds. This second operating mode has the advantage of reducing the temperature of the air taken in with the evaporation of the fuel, thus reducing the octane request of the engine and, consequently, the gap of performances that can be delivered with the liquid fuel. This embodiment, which is not shown in the figures, is equivalent to not having a vaporisation device VP and having two separate injection systems J (and J').

This invention can be advantageously implemented by means of a computer program comprising coding means for carrying out one or more steps of the method, when the program is executed by a computer. Therefore, the scope of protection is extended to said computer program and, furthermore, to means that can be read by a computer and comprises a recorded message, said means that can be read by a computer comprising coding means for a program for carrying out one or more steps of the method, when the program is executed by a computer.

When reading the description above, a skilled person can carry out the subject-matter of the invention without introducing further manufacturing details. The elements and features contained in the different preferred embodiments, drawings included, can be combined with one another, without for this reason going beyond the scope of protection of this patent application. The information contained in the part concerning the state of art only serves the purpose of better understanding the invention and does nor represent a declaration of existence of the items described. Furthermore, if not specifically excluded by the detailed description, the information contained in the part concerning the state of art can be considered as combined with the features of the invention. None of the features of the different variants is essential and, therefore, the single features of each preferred variant or drawing can be individually combined with the other variants.

## Claims

1. Fuel withdrawing system from a reservoir (TK) of compressed natural gas including a non-condensable gaseous fraction (GF), substantially pure methane, and a condensed fraction (LF), substantially liquid propane and ethylene, to supply an internal combustion engine (E), the system comprising
- means (S) for measuring the condensed fraction (LF) in said reservoir (TK) and/or means (ECU) for estimating the presence of the condensed fraction (LF), by detection of a refuelling procedure of the reservoir (TK), and for continuously estimating a relative presence on the basis of an effective withdrawal of said gaseous fraction (GF) and/or condensed fraction (LF)
- means ((HO, GP, PR), (LO, LP, VP)) for selectively withdrawing said gaseous fraction (GF), and said condensed fraction (LF),
- processing unit (ECU) adapted to control said selective withdrawal so as to supply said condensed fraction (LF), simultaneously with said gaseous fraction (GF), to said internal combustion engine (E) according to a predefined desired value of the octane number of the overall fuel mixture, taking into account that said condensed fraction and said gaseous fraction have different octane numbers.

2. System according to claim 1, wherein said processing unit is configured to adapt said octane number according to one or more operating conditions of the internal combustion engine (E).

3. System according to claim 2, wherein said one or more operating conditions comprise:
- an engine point or load below a predefined threshold,
- a temperature of an intake air below a second predefined threshold,
- a temperature of a cooling fluid of the internal combustion engine below a third predefined threshold,
- a condition in which the internal combustion engine (E) is dragged, wherein an injection of fuel is necessary so as not to cool a relative ATS (After Treatment System).

4. System according to claim 3, wherein said operating parameters of said internal combustion engine (E) comprise at least one of:
- injection times,
- mixture ignition times,
- opening and closing angles of intake and/or exhaust valves
- intervention of a wastegate valve.

5. System according to any one of the preceding claims, wherein said withdrawal means ((HO, GP, PR), (LO, LP, VP)) comprise a high opening (HO) arranged in an upper part of said reservoir (TK) and a relative first duct (GP) adapted to connect said high opening (HO) to first injection means (J) by means of a pressure reduction device(PR).

6. System according to claim 5, wherein said withdrawal means ((HO, GP, PR), (LO, LP, VP)) comprise a low opening (LO) arranged in a lower part of said reservoir (TK) and a relative second duct (LP) adapted to connect said low opening (LO) to said first injection means (J) via a vaporisation device (VP).

7. System according to claim 5, wherein said withdrawal means ((HO, GP, PR), (LO, LP, VP)) comprise a low opening (LO) arranged in a lower part of said reservoir (TK) and a relative second duct (LP) adapted to connect said low opening (LO) to second injection means.

8. System according to claim 7, wherein said second injection means are adapted to perform a liquid injection of said condensed fraction (LF) into the internal combustion engine (E).

9. System according to any one of the preceding claims from 1 to 5, further comprising a second reservoir (ATK) intended to store said condensed fraction (LF), arranged on a second duct (LP) adapted to connect said low opening (LO) to second injection means, and comprising automatic transfer means (S, ECU) adapted to control an automatic transfer of said condensed fraction (LF) into said second reservoir, so as to avoid gasification of said condensed fraction as said natural gas reservoir (TK) empties.

10. System according to any one of the preceding claims 6 or 7 or 8, further comprising a second reservoir (ATK) intended to store said condensed fraction (LF), arranged on said second duct (LP), and comprising automatic transfer means (S, ECU) adapted to control an automatic transfer of said condensed fraction (LF) into said second reservoir, so as to avoid gasification of said condensed fraction as said natural gas reservoir (TK) empties.

11. Terrestrial vehicle comprising an internal combustion engine (E) and a natural gas reservoir (TK) to supply said internal combustion engine and comprising a withdrawal system according to any one of the claims from 1 to 10.

12. Method for withdrawing fuel from a reservoir (TK) of compressed natural gas, including a non-condensable gaseous fraction (GF), substantially pure methane, and a condensed fraction (LF), substantially liquid propane and ethylene, to supply an internal combustion engine (E), the method comprising
- a preliminary step of measuring the condensed fraction (LF) in said reservoir (TK) and/or means (ECU) for estimating the presence of a condensed fraction (LF), by detection of a refuelling procedure of the reservoir (TK), and for continuously estimating a relative presence on the basis of an effective withdrawal of said gaseous fraction (GF) and/or condensed fraction (LF);
- a step of selectively withdrawing the gaseous fraction (GF), and said condensed fraction (LF) by controlling said selective withdrawal so as to supply said condensed fraction (LF), simultaneously with said gaseous fraction (GF), to said internal combustion engine (E), according to a predefined desired value of the octane number of the overall fuel mixture, taking into account that said condensed fraction and said gaseous fraction have different octane numbers.

13. Method according to claim 12, further comprising a step of adapting said octane number according to one or more operating conditions of the internal combustion engine (E) and/or a step of adapting at least one of said operating parameters according to said octane number obtained.

14. Method according to claim 13, wherein said one or more operating conditions comprise:
- an engine point or load below a predefined threshold,
- a temperature of an intake air below a second predefined threshold,
- a temperature of a cooling fluid of the internal combustion engine below a third predefined threshold,
- a condition in which the internal combustion engine (E) is dragged, wherein an injection of fuel is necessary so as not to cool a relative ATS (After Treatment System).

15. Method according to any of the preceding claims from 12 to 13, further comprising a preliminary step of transferring said condensed fraction into a second reservoir (ATK).

## Patentansprüche

1. System zum Abziehen von Kraftstoff aus einem Vorratsbehälter (TK) von komprimiertem Erdgas, umfassend einen nicht kondensierbaren, gasförmigen Anteil (GF), im Wesentlichen reines Methan, und einen kondensierten Anteil (LF), im Wesentlichen flüssiges Propan und Ethylen, zur Versorgung eines Verbrennungsmotors (E), welches System umfasst,
- Mittel (S) zur Messung des kondensierten Anteils (LF) in dem Reservoir (TK) und/oder Mittel (ECU) zur Schätzung der Präsenz des kondensierten Anteils (LF) durch Bestimmung eines Wiederbefüllvorgangs des Vorratsbehälters (TK), und zur kontinuierlichen Schätzung einer relativen Präsenz auf der Basis eines tatsächlichen Abzugs des gasförmigen Anteils (GF) und/oder des kondensierten Anteils (LF),
- Mittel ((HO, GP, PR), (LO, LP, VP)) zum selektiven Abzug des gasförmigen Anteils (GF) und des kondensierten Anteils (LF),
- eine Verarbeitungseinheit (ECU), vorgesehen zur Steuerung des selektiven Abzugs, derart, dass der kondensierte Anteil (LF), gleichzeitig mit dem gasförmigen Anteil (GF) zu dem inneren Verbrennungsmotor (E) entsprechend einem vorbestimmten gewünschten Wert der Oktanzahl der gesamten Kraftstoffmischung zugeführt wird, unter Berücksichtigung, dass der kondensierte Anteil und der gasförmige Anteil unterschiedliche Oktanzahlen aufweisen.

2. System gemäß Anspruch 1, bei welchem die Verarbeitungseinheit dazu vorgesehen ist, die Oktanzahl gemäß einer oder mehrerer Betriebsbedingungen des Verbrennungsmotors (E) anzupassen.

3. System gemäß Anspruch 2, bei welchem die eine oder Betriebsbedingungen umfassen:
- einen Motorbetriebspunkt oder eine Last unterhalb einer vorbestimmten Schwelle,
- eine Temperatur einer Einlassluft unterhalb einer zweiten vorbestimmten Schwelle,
- eine Temperatur eines Kühlfluids des Verbrennungsmotors unterhalb einer dritten vorbestimmten Schwelle,
- eine Bedingung, bei welcher der Verbrennungsmotor (E) gezogen wird, wobei eine Kraftstoffeinspritzung erforderlich ist, um nicht ein relatives ATS (Nachbehandlungssystem) zu kühlen.

4. System gemäß Anspruch 3, bei welchem die Betriebsparameter des Verbrennungsmotors (E) zumindest einen der folgenden umfassen:
- Einspritzzeiten,
- Mischungs-Zündzeiten,
- Öffnungs- und Schließwinkel der Einlass- und/oder Auslassventile,
- Zwischenschaltung eines Überdruckventils.

5. System gemäß einem der vorhergehenden Ansprüche, bei welchem die Abzugsmittel ((HO, GP, PR), (LO, LP, VP)) eine hohe Öffnung (HO) umfassen, die in einem oberen Teil des Behälters (TK) angeordnet ist, und eine relative erste Leitung (GP), vorgesehen zur Verbindung der hohen Öffnung (HO) mit ersten Einspritzmitteln (J) durch eine Druckminderungseinrichtung (PR).

6. System gemäß Anspruch 5, bei welchem die Abzugsmittel ((HO, GP, PR), (LO, LP, VP)) eine niedrige Öffnung (LO) umfassen, die in einem unteren Teil des Behälters (TK) angeordnet ist, und eine relative zweite Leitung (LP) vorgesehen zur Verbindung der niedrigen Öffnung (LO) mit den ersten Einspritzmitteln (J) für eine Verdampfungseinrichtung (VP).

7. System gemäß Anspruch 5, bei welchem die Abzugsmittel ((HO, GP, PR), (LO, LP, VP)) eine niedrige Öffnung (LO) umfassen, die in einem unteren Teil des Behälters (TK) angeordnet ist, und eine relative zweite Leitung (LP), vorgesehen zur Verbindung der niedrigen Öffnung (LO) mit zweiten Einspritzmitteln.

8. System gemäß Anspruch 7, bei welchem die zweiten Einspritzmittel dazu vorgesehen sind, eine Flüssigeinspritzung des kondensierten Anteils (LF) in den Verbrennungsmotor (E) durchzuführen.

9. System gemäß einem der vorhergehenden Ansprüche 1 bis 5, ferner umfassend einen zweiten Behälter ATK, vorgesehen zur Speicherung des kondensierten Anteils (LF), angeordnet in einer zweiten Leitung (LP), vorgesehen zur Verbindung der niedrigen Öffnung (LO) mit zweiten Einspritzmitteln, und umfassend automatische Übertragungsmittel (S, ECU), vorgesehen zur Steuerung einer automatischen Übertragung des kondensierten Anteils (LF) in den zweiten Behälter, um eine Vergasung des kondensierten Anteils zu verhindern, wenn der Erdgasbehälter (TK) sich leert.

10. System gemäß einem der vorhergehenden Ansprüche 6 oder 7 oder 8, ferner umfassend einen zweiten Behälter (ATK), vorgesehen zur Speicherung des kondensierten Anteils (LF), angeordnet in der zweiten Leitung (LP) und umfassend automatische Übertragungsmittel (S, ECU), vorgesehen zur Steuerung einer automatischen Übertragung des kondensierten Anteils (LF) in den zweiten Behälter, um eine Vergasung des kondensierten Anteils zu verhindern, wenn der Erdgasbehälter (TK) sich leert.

11. Landfahrzeug, umfassend einen Verbrennungsmotor (E) und einen Erdgasbehälter (TK) zur Versorgung des Verbrennungsmotors, umfassend ein Abzugssystem gemäß einem der Ansprüche 1 bis 10.

12. Verfahren zum Abzug von Kraftstoff aus einem Behälter (TK) für komprimiertes Erdgas, umfassend einen nicht kondensierbaren, gasförmigen Anteil (GF), im Wesentlichen reines Methan, und einen kondensierten Anteil (LF), im Wesentlichen flüssiges Propan und Ethylen, zur Versorgung eines inneren Verbrennungsmotors (E), welches Verfahren umfasst:
- einen vorhergehenden Schritt der Messung des kondensierten Anteils (LF) in dem Behälter (TK) und/oder Mittel (ECU) zur Schätzung der Präsenz des kondensierten Anteils (LF), durch Bestimmung eines Wiederbefüllungsvorgangs des Behälters (TK), und zur kontinuierlichen Schätzung einer relativen Präsenz auf der Basis eines effektiven Abzugs des gasförmigen Anteils (GF) und/oder des kondensierten Anteils (LF);
- einen Schritt des selektiven Abzugs des gasförmigen Anteils (GF) und des kondensierten Anteils (LF) durch Steuerung des selektiven Abzugs, derart, dass der kondensierte Anteil (LF) gleichzeitig mit dem gasförmigen Anteil (GF) dem Verbrennungsmotor zugeführt wird, gemäß einem vorbestimmten, gewünschten Wert der Oktanzahl der gesamten Kraftstoffmischung, unter Berücksichtigung, dass der kondensierte Anteil und der gasförmige Anteil unterschiedliche Oktanzahlen aufweisen.

13. Verfahren gemäß Anspruch 12, ferner umfassend einen Schritt der Anpassung der Oktanzahl gemäß einer oder mehreren Betriebsbedingungen des Verbrennungsmotors (E) und/oder einen Schritt der Anpassung von zumindest einem der Betriebsparameter gemäß der ermittelten Oktanzahl.

14. Verfahren gemäß Anspruch 13, bei welchem die eine oder mehrere Betriebsbedingungen umfassen:
- einen Arbeitspunkt oder eine Last unterhalb einer vorbestimmten Schwelle,
- eine Temperatur einer Einlassluft unterhalb einer zweiten vorbestimmten Schwelle,
- eine Temperatur eines Kühlfluids des inneren Verbrennungsmotors unterhalb einer dritten vorbestimmten Schwelle,
- eine Bedingung, bei welcher der Verbrennungsmotor (E) gezogen wird, wobei eine Einspritzung von Kraftstoff erforderlich ist, so dass ein relatives ATS (Nachbehandlungssystem) nicht gekühlt wird.

15. Verfahren gemäß einem der vorhergehenden Schritte 12 bis 13, ferner umfassend einen vorhergehenden Schritt der Übertragung des kondensierten Anteils in einen zweiten Behälter (ATK).

## Revendications

1. Système de retrait de carburant d'un réservoir (TK) de gaz naturel comprimé incluant une fraction gazeuse non condensable (GF), du méthane sensiblement pur et une fraction condensée (LF), du propane sensiblement liquide et de l'éthylène, pour alimenter un moteur à combustion interne (E), le système comprenant
- un moyen (S) pour mesurer la fraction condensée (LF) dans ledit réservoir (TK) et/ou un moyen (ECU) pour estimer la présence de la fraction condensée (LF), par détection d'une procédure de ravitaillement du réservoir (TK), et pour estimer en continu une présence relative sur la base d'un retrait efficace de ladite fraction gazeuse (GF) et/ou fraction condensée (LF)
- des moyens ((HO, GP, PR), (LO, LP, VP)) pour retirer sélectivement ladite fraction gazeuse (GF), et ladite fraction condensée (LF),
- une unité de traitement (ECU) adaptée pour commander ledit retrait sélectif de manière à apporter ladite fraction condensée (LF), simultanément avec ladite fraction gazeuse (GF), audit moteur à combustion interne (E) selon une valeur souhaitée prédéfinie de l'indice d'octane du mélange de carburant global, en prenant en compte le fait que ladite fraction condensée et ladite fraction gazeuse ont des indices d'octane différents.

2. Système selon la revendication 1, dans lequel ladite unité de traitement est configurée pour adapter ledit indice d'octane en fonction d'une ou de plusieurs conditions de fonctionnement du moteur à combustion interne (E).

3. Système selon la revendication 2, dans lequel lesdites une ou plusieurs conditions de fonctionnement comprennent :
- un point ou une charge moteur sous un seuil prédéfini,
- une température d'un air d'admission sous un deuxième seuil prédéfini,
- une température d'un fluide de refroidissement du moteur à combustion interne sous un troisième seuil prédéfini,
- une condition dans laquelle le moteur à combustion interne (E) est traîné, dans lequel une injection de carburant est nécessaire de manière à ne pas refroidir un ATS (Système Après-Traitement) relatif.

4. Système selon la revendication 3, dans lequel lesdits paramètres de fonctionnement dudit moteur à combustion interne (E) comprennent au moins un parmi :
- des temps d'injection,
- des temps d'allumage de mélange,
- des angles d'ouverture et de fermeture de soupapes d'admission et/ou d'échappement
- l'intervention d'une soupape de décharge.

5. Système selon l'une quelconque des revendications précédentes, dans lequel lesdits moyens ((HO, GP, PR), (LO, LP, VP)) comprennent une ouverture élevée (HO) agencée dans une partie supérieure dudit réservoir (TK) et un premier conduit relatif (GP) adapté pour raccorder ladite ouverture élevée (HO) à un premier moyen d'injection (J) à l'aide d'un dispositif de réduction de pression (PR).

6. Système selon la revendication 5, dans lequel lesdits moyens ((HO, GP, PR), (LO, LP, VP)) comprennent une ouverture basse (LO) agencée dans une partie inférieure dudit réservoir (TK) et un deuxième conduit relatif (LP) adapté pour raccorder ladite ouverture basse (LO) à audit premier moyen d'injection (J) par l'intermédiaire d'un dispositif de vaporisation (VP).

7. Système selon la revendication 5, dans lequel lesdits moyens ((HO, GP, PR), (LO, LP, VP)) comprennent une ouverture basse (LO) agencée dans la partie inférieure dudit réservoir (TK) et un deuxième conduit relatif (LP) adapté pour raccorder ladite ouverture basse (LO) à un deuxième moyen d'injection.

8. Système selon la revendication 7, dans lequel ledit deuxième moyen d'injection est adapté pour effectuer une injection liquide de ladite fraction condensée (LF) dans le moteur à combustion interne (E).

9. Système selon l'une quelconque des revendications précédentes de 1 à 5, comprenant en outre un deuxième réservoir (ATK) destiné à stocker ladite fraction condensée (LF), agencée sur un deuxième conduit (LP) adapté pour raccorder ladite ouverture basse (LO) à un deuxième moyen d'injection, et comprenant des moyens de transfert automatique (S, ECU) adaptés pour commander un transfert automatique de ladite fraction condensée (LF) dans ledit deuxième réservoir, de manière à éviter la gazéification de ladite fraction condensée quand ledit réservoir de gaz naturel (TK) se vide.

10. Système selon l'une quelconque des revendications précédentes de 7 ou 8, comprenant en outre un deuxième réservoir (ATK) destiné à stocker ladite fraction condensée (LF), agencée sur ledit deuxième conduit (LP), et comprenant des moyens de transfert automatique (S, ECU) adaptés pour commander un transfert automatique de ladite fraction condensée (LF) dans ledit deuxième réservoir, de manière à éviter la gazéification de ladite fraction condensée quand ledit réservoir de gaz naturel (TK) se vide.

11. Véhicule terrestre comprenant un moteur à combustion interne (E) et un réservoir de gaz naturel (TK) pour alimenter ledit moteur à combustion interne et comprenant un système de retrait selon l'une quelconque des revendications 1 à 10.

12. Procédé pour retirer du carburant d'un réservoir (TK) de gaz naturel comprimé, incluant une fraction gazeuse non condensable (GF), du méthane sensiblement pur et une fraction condensée (LF), du propane sensiblement liquide et de l'éthylène, pour alimenter un moteur à combustion interne (E), le procédé comprenant
- une étape préliminaire de mesure de la fraction condensée (LF) dans ledit réservoir (TK) et/ou un moyen (ECU) pour estimer la présence d'une fraction condensée (LF), par détection d'une procédure de ravitaillement du réservoir (TK), et pour estimer en continu une présence relative sur la base d'un retrait efficace de ladite fraction gazeuse (GF) et/ou fraction condensée (LF) ;
- une étape de retrait sélectif de la fraction gazeuse (GF), et de ladite fraction condensée (LF) en commandant ledit retrait sélectif de manière à apporter ladite fraction condensée (LF), simultanément avec ladite fraction gazeuse (GF), audit moteur à combustion interne (E), selon une valeur souhaitée prédéfinie de l'indice d'octane du mélange de carburant global, en prenant en compte le fait que ladite fraction condensée et ladite fraction gazeuse ont des indices d'octane différents.

13. Procédé selon la revendication 12, comprenant en outre une étape d'adaptation dudit indice d'octane en fonction d'une ou de plusieurs conditions de fonctionnement du moteur à combustion interne (E) et/ou une étape d'adaptation d'au moins un desdits paramètres de fonctionnement en fonction dudit indice d'octane obtenu.

14. Procédé selon la revendication 13, dans lequel lesdites une ou plusieurs conditions de fonctionnement comprennent :
- un point ou une charge moteur sous un seuil prédéfini,
- une température d'un air d'admission sous un deuxième seuil prédéfini,
- une température d'un fluide de refroidissement du moteur à combustion interne sous un troisième seuil prédéfini,
- une condition dans laquelle le moteur à combustion interne (E) est traîné, dans lequel une injection de carburant est nécessaire de manière à ne pas refroidir un ATS (Système Après-Traitement) relatif.

15. Procédé selon l'une quelconque des revendications 12 à 13, comprenant en outre une étape préliminaire de transfert de ladite fraction condensée dans un deuxième réservoir (ATK).
